# EUROPEAN PATENT SPECIFICATION

(11) **EP 2 993 553 B1**
(45) Date of publication and mention of the grant of the patent: **21.03.2018**
(21) Application number: 15183783.8
(22) Date of filing: 03.09.2015
(51) Int. Cl.: G04G 17/00, E05D 3/02, G06F 1/16

(54) **ANGLE ADJUSTMENT MECHANISM**
WINKELJUSTIERUNGSMECHANISMUS
MÉCANISME DE RÉGLAGE D'ANGLE

(30) Priority: 05.09.2014 US 201414477877
(43) Date of publication of application: 09.03.2016
(73) Proprietor: HTC Corporation, Taoyuan City 330 (TW)
(72) Inventor: Wu, Chou-Wei, 330, Taoyuan District, Taoyuan City (TW); Chen, Zhao-Yin, 330, Taoyuan District, Taoyuan City (TW); Lin, Yen-Cheng, 330, Taoyuan District, Taoyuan City (TW); Chen, Cheng-Yu, 330, Taoyuan District, Taoyuan City (TW)
(74) Representative: Emde, Eric

(56) References cited:
- WO-A1-97/25903
- US-A1- 2005 189 457
- US-A1- 2014 167 585

## Description

### BACKGROUND OF THE APPLICATION

### 1. Field of the Application

The application generally relates to an angle adjustment mechanism, and more particularly, to an angle adjustment mechanism having an angle fixing function.

### 2. Description of Related Art

In recent years, with the prosperous developments of the technology industries, portable electronic devices such as Notebook computers (NB), tablet computers and smart phones are frequently used in our daily life. Types and functions of the electronic devices have become increasingly diverse, and because of convenience and practicality, the electronic devices have become more and more popular and can be used for various purposes. Moreover, for improving the convenience of the portable electronic devices, many wearable electronic devices (such as smart watches or smart wristbands), which can directly be worn on the user body, have been correspondingly developed.

US 2005/189457 A1 was used as a basis for the preamble of claim 1 and relates to an adjustable garment rod which includes a mounting bracket, an inner housing, a resilient element and a suspension arm. The mounting bracket has an arm slot and a first toothed ratchet surface and second toothed ratchet surface formed alongside the arm slot. The inner housing is mounted pivotally in the arm slot and holds the suspension arm. The suspension arm extends out of the arm slot and has two toothed protrusions. The resilient element presses the suspension arm so that the toothed protrusions engage the toothed ratchet surfaces to hold firmly the suspension arm at a given angular position. Further, the garment rod uses several simple parts so that assembling the garment rod is easy and quick, which saves costs and time.

WO 97/25903 A1 describes a support assembly for a computer keyboard. The assembly includes a generally U-shaped rigid support member, and a platform for supporting the keyboard mounted on a central portion of the support member. Projecting end portions of the support member are mounted on attachment members fixed to the bottom of a table or desk top. A releasable friction clutch restricts pivotal movement of the platform around the central portion of the support member. A releasable ratchet assembly prevents revolving movement of the central portion toward a lowered position relative to the attachment members. A switching mechanism can be manually activated to release the ratchet assemblies and the friction clutch so that the position and orientation of the platform relative to the table or desk top can be adjusted.

In terms of general watches, a watchband thereof is generally connected with the watch body via a pivot, and the watchband and the watch body may rotate in relative to each other along the pivot. However, in terms of the smart watches, a watchband of the smart watch is no longer designed as to mainly surround the wrist of the user. For instance, the watchband of the smart watch may adopt a C-shape. Now, since the wrist sizes of different users may not be the same, the watchband of the smart watch having the C-shape or the smart wristband having the C-shape is unable to fit the users of different wrist sizes.

### SUMMARY OF THE APPLICATION

The application is directed to an angle adjustment mechanism having an angle fixing function.

An angle adjustment mechanism of the present invention is provided as set forth in claim 1. Preferred embodiments of the invention may be gathered from the dependent claims.

In view of the above, in the angle adjustment mechanism of the application, the first body has the first positioning structure, the second body has the second positioning structure, and the first positioning structure and the second positioning structure are engaged to each other, so as to fix an angle between the first body and the second body. In addition, the second body is adapted to rotate in relative to the first body along the axial direction, so as to adjust the angle. Now, the second positioning structure moves away from the first positioning structure along the radius direction, so that the restoring element coupled to the second body accumulates the restoring force. As such, the second positioning structure can approach the first positioning structure along the radius direction via the restoring force after the second body rotates an angle in relative to the first body, so as to be reengaged to each other, thereby fixing the angle between the first body and the second body further again. Accordingly, the angle adjustment mechanism of the application has a positioning function, and the first body and the second body may adjust the angle therebetween through rotations and be fixed into positions after being rotated.

To make the aforementioned and other features and advantages of the application more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is perspective view illustrating an angle adjustment mechanism according to an embodiment of the invention.
FIG. 2 is an exploded view of the angle adjustment mechanism shown in FIG. 1.
FIG. 3 is a partial cross-sectional view of the angle adjustment mechanism shown in FIG. 1.
FIG. 4 is a schematic view of the first body shown in FIG. 1.
FIG. 5 is a perspective view illustrating an angle adjustment mechanism according to another embodiment of the invention.
FIG. 6 is an exploded view of the angle adjustment mechanism shown in FIG. 5.
FIG. 7 is a partial cross-sectional view of the angle adjustment mechanism shown in FIG. 5.
FIG. 8 is a side view of the first body shown in FIG. 5.

### DESCRIPTION OF THE EMBODIMENTS

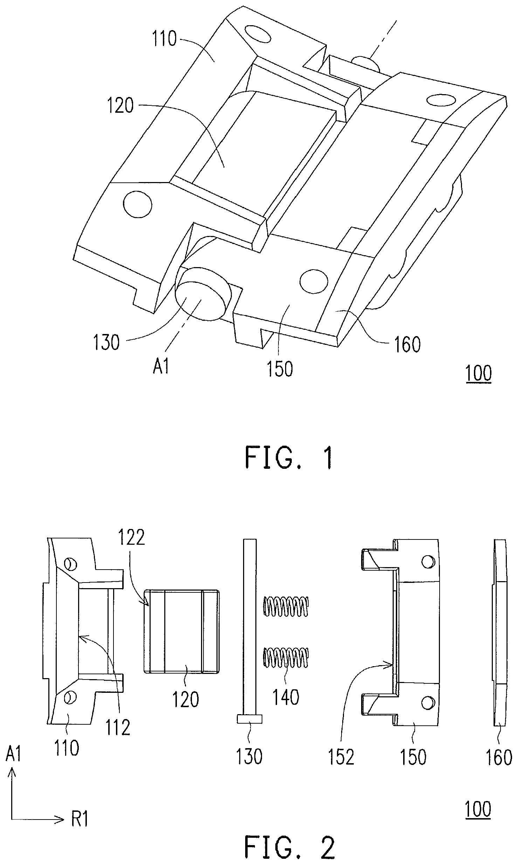

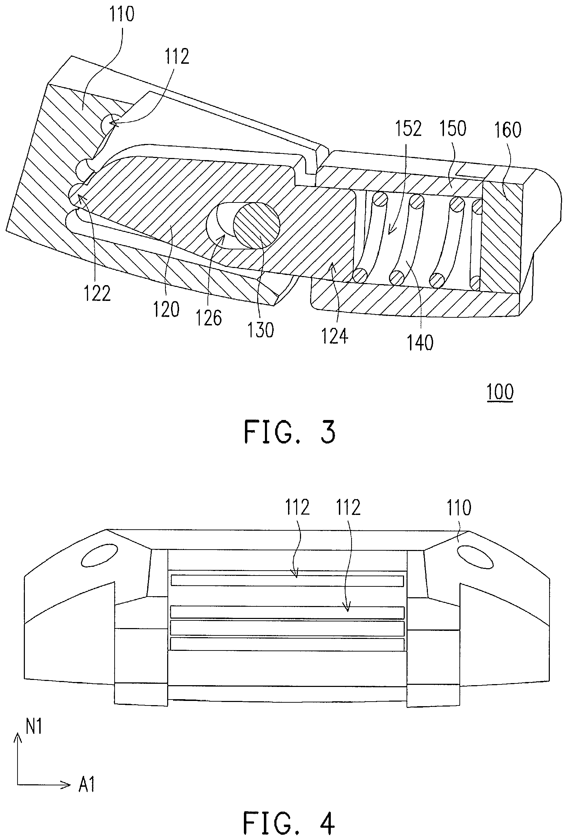

FIG. 1 is perspective view illustrating an angle adjustment mechanism according to an embodiment of the invention. FIG. 2 is an exploded view of the angle adjustment mechanism shown in FIG. 1. FIG. 3 is a partial cross-sectional view of the angle adjustment mechanism shown in FIG. 1. Referring to FIG. 1 through FIG. 3, in the present embodiment, an angle adjustment mechanism 100 includes a first body 110, a second body 120, a pivot 130, and a restoring element 140. The second body 120 is movably coupled to the first body 110, wherein the first body 110 has a first positioning structure, which is, for example, a plurality of positioning recesses 112, the second body 120 has a second positioning structure, which is, for example, a positioning protrusion 122, and the positioning protrusion 122 is correspondingly engaged into one of the positioning recesses 112, so that the second positioning structure and the first positioning structure are engaged to each other, thereby fixing an angle between the first body 110 and the second body 120. Furthermore, the pivot 130 is disposed between the first body 110 and the second body 120 along an axial direction A1. Hence, the second body 120 is adapted to rotate in relative to the first body 110 along the axial direction A1 via the pivot 130, so that the second positioning structure moves away from the first positioning structure along a radius direction R1. In other words, the positioning protrusion 122, which is being the second positioning structure, is adapted to move out of the corresponding positioning recess 112 along the radius direction R1 when the second body 120 rotates in relative to the first body 110 along the axial direction A1. In addition, the restoring element 140 is coupled to the second body 120, wherein the restoring element 140 may a coil spring or other applicable elements; the application is not limited thereto. Hence, the restoring element 140 may be deformed following the movement of the second body 120. Consequently, the restoring element 140 is adapted to accumulate a restoring force when the positioning protrusion 122 moves out of the corresponding positioning recess 112 along the radius direction R1 so as to enable the second positioning structure to move away from the first positioning structure along the radius direction R1, so that the second positioning structure is adapted to approach the first positioning structure along the radius direction R1 via the restoring force after the second body 120 rotates an angle in relative to the first body 110, so as to be reengaged to each other. That is, after the positioning protrusion 122 moves out of the corresponding positioning recess 112, the second body 120 also rotates an angle in relative to the first body 110. Therefore, the positioning protrusion 122, which is being the second positioning structure, may approach and be engaged into another one of the positioning recesses, which are being the first positioning structure, along the radius direction R1 via the restoring element 140 releasing the restoring forcing, so as to be reengaged to each other. Accordingly, after the first body 110 and the second body 120 rotate in relative to each other, the positioning protrusion 122 may be engaged into another one of the positioning recesses 112 via the restoring force of the restoring element 140, thereby fixing the angle between the first body 110 and the second body 120 further again.

Specifically, in the present embodiment, the angle adjustment mechanism 100 further includes a fixing base 150 and a supporting member 160. The fixing base 150 has an accommodation space 152. The supporting member 160 is disposed at a side of the fixing base 150 and connected to the accommodation space 152. The fixing base 150 is connected with the first body 110 and the second body 120. Further speaking, the first body 110, the second body 120 and the fixing base 150 are pivoted together by the pivot 130, wherein the second body 120 is located between the first body 110 and the fixing base 150, and a bottom 124 of the second body 120 that is opposite to the positioning protrusion 122 is located within the accommodation space 152. Hence, the fixing base 150 is adapted to rotate in relative to the first body 110 along the axial direction A1 via the pivot 130 and drive the second body 120 to rotate in relative to the first body 110 and to move within the accommodation space 152. Moreover, in the present embodiment, the second body 120 has a sliding slot 126, and the pivot 130 is disposed within the sliding slot 126. Hence, the second body 120 is adapted to move in relative to the pivot 130 through the sliding slot 126, so that the positioning protrusion 122 can move out of or be engaged into the corresponding positioning recess 112 along the radius direction R1, thereby enabling the second positioning structure to move away from or approach the first positioning structure along the radius direction R1, and enabling the bottom 124 of the second body 120 may move within the accommodation space 152. In other words, when the fixing base 150 rotates in relative to the first body 110 along the axial direction A1 via the pivot 130, the second body 120 as being driven by the fixing base 150 rotates in relative to the first body 110. In the process whereby the second body 120 rotates in relative to the first body 110 along the axial direction A1 via the pivot 130, the positioning protrusion 122 may move in relative to pivot 130 through the sliding slot 126 so as to simultaneously move out of or be engaged into the corresponding positioning recess 112 along the radius direction R1, and may move in relative to the fixing base 150. Furthermore, the restoring element 140 is disposed within the accommodation space 152, and the restoring element 140 is connected between the bottom 124 of the second body 120 that faces towards the accommodation space 152 and the supporting member 160. Hence, the second body 120 may compress the restoring element 140 while the positioning protrusion 122 moving out of the corresponding positioning recess 112 along the radius direction R1, and thus causes the restoring element 140 to be deformed within the accommodation space 152, thereby accumulating the restoring force. After the positioning protrusion 122 moves out of the corresponding positioning recess 112 along the radius direction R1, the first body 110 and second body 120 also rotate an angle in relative to each other, thereby causing the positioning protrusion 120 to face towards another positioning recess 112. Hence, after the positioning protrusion 122 moves out of the corresponding positioning recess 112 along the radius direction R1, the restoring element 140 is deformed within the accommodation space 152 for releasing the restoring force, so as to drive the second body 120 to move towards the first body 110 via the restoring force, thereby enabling the positioning protrusion 122 to be engaged into the another positioning recess 112 along the radius direction R1.

FIG. 4 is a schematic view of the first body shown in FIG. 1. Referring to FIG. 1 through FIG. 4, in the present embodiment, each of the positioning recesses 112 and the positioning protrusion 122 are long strip-shaped. For instance, each of the positioning recesses 112 may be a strip-shaped indentation, and the positioning protrusion 122 may be a strip-shaped protruding rib. An extending direction of each of the positioning recesses 112 and an extending direction of the positioning protrusion 122 are parallel to each other. Hence, each of the positioning recesses 112 is arranged as parallel to one another, and the shape of the positioning protrusion 122 is substantially corresponded to each of the positioning recesses 112, so that the positioning protrusion 122 may be engaged into the corresponding positioning recess 112. Moreover, each of the said extending directions is parallel to the axial direction A1. Therefore, when the second body 120 rotates in relative to the first body 110 along the axial direction A1 to enable the positioning protrusion 122 to move out or be engaged into the corresponding positioning recess 112, the positioning protrusion 122 may be considered as being forwardly or backwardly displaced along a direction N1 (as shown in FIG. 4) perpendicular to the axial direction A1 and be engaged into one of the adjacent positioning recess 112 after moving out of the corresponding positioning recess 112. Furthermore, in the present embodiment, since the positioning protrusion 122 may be engaged into the corresponding positioning recess 112 via the restoring force of the restoring element 140, the sizes of the positioning recesses 112 and the positioning protrusion 122 may influence the actuation of the angle adjustment mechanism 100. For instance, when the positioning recesses 112 have a deeper depth, the second body 120 would produce a more significant displacement when the positioning protrusion 122 moves out of or engages into the corresponding positioning recess 112. As such, the angle adjustment mechanism 100 may have favorable operating feel. In addition, in the present embodiment, a profile of each of the positioning recesses 112 is corresponded to a profile of the positioning protrusion 122. For instance, profile sections of each of the positioning recesses 112 and the positioning protrusion 122 may be arc-shaped or other curved-line-shaped, as shown in FIG. 3. Therefore, the positioning protrusion 122 is adapted to move along the surface of the corresponding positioning recess 112 in order to move out of or be engaged into the corresponding positioning recess 112. In other words, by designing the profiles of each of the positioning recesses 112 and the positioning protrusion 122 to be corresponded to each other, preferably designing into arc-shapes, the process of moving the positioning protrusion 122 out of or engaging the positioning protrusion 122 into the corresponding positioning recess 112 may be more smooth.

Accordingly, it can be known that, in the present embodiment, by disposing the plurality of positioning recesses 112 on the first body 110, the first body 110 and the second body 120 may be fixed at a plurality of predetermined positions through rotating in relative to each other. In other words, after the first body 110 and the second body 120 rotate in relative to each other in order to adjust an use angle of the angle adjustment mechanism 100, the first body 110 and the second body 120 may be positioned through the coordination between the positioning protrusion 122 and one of the positioning recesses 112, so as to fix the angle between the first body 110 and the second body 120. Furthermore, the restoring element 140 may accumulate or release the restoring force through the first body 110 and the second body 120 rotate in relative to each other, thereby enabling the first body 110 and the second body 120 to be automatically positioned via the restoring force after rotating to a predetermined position. In addition, when the second body 120 not yet drives the restoring element 140 while the positioning protrusion 122 is already engaged into one of the positioning recesses 112, the restoring element 140 may also exist the restoring force, which is, for example, presented by firstly properly compressing the coil spring of the restoring element 140 and then disposing it between the bottom 124 of the second body 120 and the supporting member 160. As such, the, restoring element 140 may enhance a fixity between the positioning protrusion 122 and the positioning recesses 112 via the restoring force. Then, the angle adjustment mechanism 100 may adjust the angle between the first body 110 and the second body 120 via an external force, so that the second body 120 can simultaneously compress the restoring element 140 while rotating in relative to the first body 110, thereby enabling the restoring element 140 to accumulate more restoring force; and later on, by releasing the restoring force, the second body 120 may be driven to move towards the first body 110, so that the positioning protrusion 120 can be engaged into the corresponding positioning recess 112. Accordingly, with the design of the restoring element 140, the first body 110 and the second body 120 may be automatically positioned via the restoring force after being rotated to a predetermined position, and may have favorable associativity.

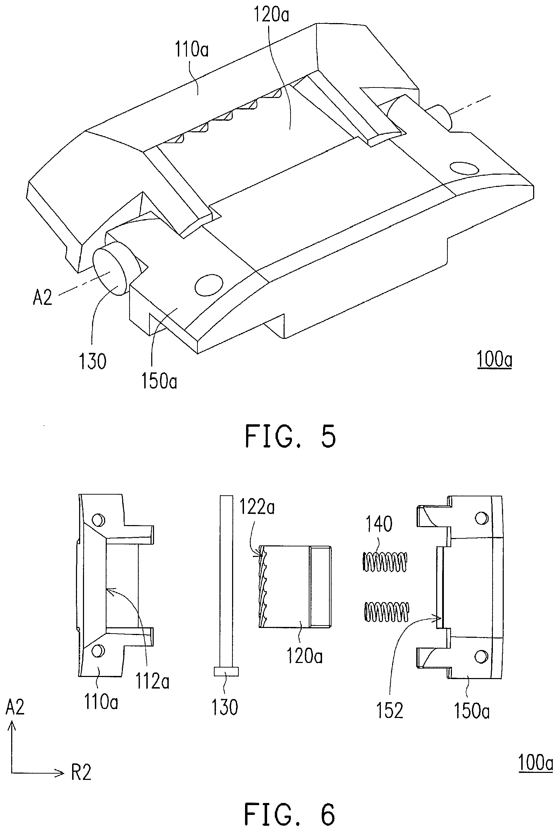

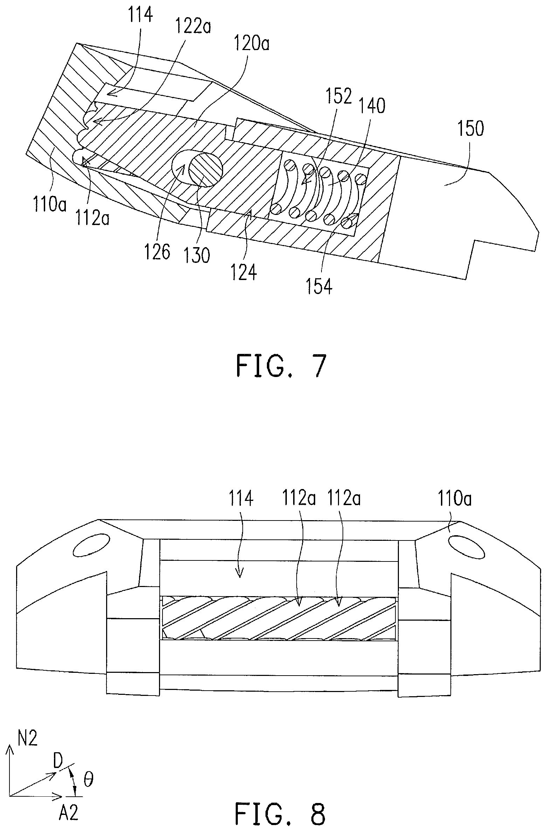

FIG. 5 is a perspective view illustrating an angle adjustment mechanism according to another embodiment of the invention. FIG. 6 is an exploded view of the angle adjustment mechanism shown in FIG. 5. FIG. 7 is a partial cross-sectional view of the angle adjustment mechanism shown in FIG. 5. FIG. 8 is a side view of the first body shown in FIG. 5. Referring to FIG. 5 through FIG. 8, in the present embodiment, an angle adjustment mechanism 100a includes a first body 110a, a second body 120a, a pivot 130, a restoring element 140, and a fixing base 150a. The first body 110a has a first positioning structure, which is, for example, a plurality of positioning recesses 112a. The second body 120a has a second positioning structure, which is, for example, a plurality of positioning protrusions 122a. Each of the positioning protrusions 122a is correspondingly engaged into one of the positioning recesses 112a, so that the second positioning structure and the first positioning structure are engaged to each other, thereby fixing an angle between the first body 110a and the second body 120a. Moreover, by using the pivot 130 and the restoring element 140 as previously described, the second body 120a may rotate in relative to the first body 110a along an axial direction A2 via the pivot 130 and drive the positioning protrusions 122a to move out of the corresponding positioning recesses 112a along a radius direction R2, so as to enable the second positioning structure to move away from the first positioning structure along the radius direction R2; and the restoring element 140 may accumulate a restoring force when the positioning protrusions 122a move out of the corresponding positioning recesses 112a along the radius direction R2. Hence, after the positioning protrusions 122a move out of the corresponding positioning recesses 112a, the positioning protrusion 122a may be engaged into another one of the positioning recesses 112a along the radius direction R2 via the restoring force of the restoring element 140, and thus the first body 110a and the second body 120a may again be positioned. Accordingly, it can be known that, the structure and functions of the angle adjustment mechanism 100a are similar to that of the previously-described angle adjustment mechanism 100. Details regarding the relative positions, the connection relationships and the actuations of the first body 110a, the second body 120a, the pivot 130, and the restoring element 140 may be referred to the previous embodiment, whereby main differences lie in the positioning recesses 112a, the positioning protrusion 122a and the fixing base 150a.

Specifically, in the present embodiment, the first body 110a, the second body 120a and the fixing base 150a are pivoted together by the pivot 130, wherein the second body 120a is located between the first body 110a and the fixing base 150a, and a bottom 124 of the second body 120a that is opposite to the positioning protrusions 122a is located within the accommodation space 152. Accordingly, details regarding the relative positions, the connection relationships and the actuations of the first body 110a, the second body 120a, the restoring element 140, and the fixing base 150a may be referred to that of the first body 110, the second body 120, the restoring element 140, and the fixing base 150 of the previous embodiment, and thus no further elaboration will be provided. However, as being different from the previous embodiment, the fixing base 150a of the present embodiment is not being disposed with the previously-described supporting member 160, wherein the restoring element 140 is located within the accommodation space 152 and connected between the bottom 124 of the second body 120a that faces towards the accommodation space 152 and an inner portion 154 of the fixing base 150a, so as to be deformed within the accommodation space 152 for accumulating or releasing the restoring force. In other words, the fixing base 150a of the present embodiment may be considered as a combination of the previously described fixing base 150 and supporting member 160. Accordingly, it can be known that, the application does not intend to limit the specific shape of the fixing base.

Furthermore, in the present embodiment, the amount of the positioning recesses 112a and the amount of the positioning protrusions 122a are respectively a plurality, and the positioning recesses 112a and the positioning protrusion 122a are corresponded to each other. The positioning recesses 112a and the positioning protrusions 122a are long strip-shaped, such that the positioning recesses 112a are being strip-shaped indentations, and the positioning protrusions 122a are being strip-shaped protruding ribs. An extending direction D of each of the positioning recesses 112a and an extending direction D of each of the positioning protrusions 122a are parallel to each other. Hence, the positioning recesses 112a and the positioning protrusions 122a are arranged as parallel to each other, and the shapes of the positioning protrusions 122a are substantially corresponded to that of the positioning recesses 112a, so that the positioning protrusions 122a may be engaged into the corresponding positioning recesses 112a. In addition, in the present embodiment, the first body 110a has an indentation 114 located at a side of the positioning recesses 112a. After at least one of the positioning protrusions 122a moves out of the positioning recesses 112a, the said positioning protrusion 122a being out of the positioning recesses 112a is then located within the indentation 114. Hence, the second body 120a may rotate in relative to the first body 110a so as to enable the lower most positioning protrusion 122a to be engaged into the uppermost positioning recess 112a, while the rest of the positioning protrusions 122a are moved into the indentation 114 without interfering with the relative rotations between the first body 110a and the second body 120a.

Moreover, in the present embodiment, the extending directions D of each of the positioning recesses 112a and each of the positioning protrusions 122a and the axial direction A2 are not parallel to each other and have an included angle θ therebetween. In other words, the positioning recesses 112a and the positioning protrusions 122a may be considered as being arranged obliquely in relative to the moving directions of the first body 110a and the second body 120a. Hence, when the second body 120a rotates in relative to the first body 110a along the axial direction A2 via the pivot 130 so as to enable each of the positioning protrusions 122a to move out of or be engaged into the corresponding positioning recess 112a along the radius direction R2, each of the positioning protrusions 122a may be considered as being forwardly or backwardly displaced along a direction N2 perpendicular to the axial direction A2 and be engaged into another one of the adjacent positioning recess 112a after moving out of the corresponding positioning recess 112a. In addition, since the positioning recesses 112a and the positioning protrusions 122a of the present embodiment are arranged obliquely, a friction force being generated when the positioning protrusions 122a moving out of the corresponding positioning recesses 112a may result in a component force in the extending direction D of the positioning recesses 112a, thereby lowing an influence of the friction force on the positioning protrusions 122a and the positioning recesses 112a when the positioning protrusions 122a engage into or move out of the corresponding positioning recesses 112a along the direction N2. As such, the included angle θ is preferably more than or equal to 0 degree and less than 90 degrees, but the application is not limited thereto. With the above-mentioned design, through adjusting the included angle θ between the extending direction D and the axial direction A2, the friction force generated due to the relative movements between the positioning protrusions 122a and the correspondingly positioning recesses 112a may result in the component force in the extending direction D, thereby lowering attritions between the positioning protrusions 122a and the positioning recesses 112a and thus enhancing the life cycle of the angle adjustment mechanism 100a.

Accordingly in the present embodiment, by disposing the plurality of positioning recesses 112a on the first body 110a, the first body 110a and the second body 120a may be fixed at a plurality of predetermined positions. In other words, after the first body 110a and the second body 120a rotate in relative to each other in order to adjust an use angle of the angle adjustment mechanism 100a, the first body 110a and the second body 120a may be positioned through the coordination between the positioning protrusions 122a and the positioning recesses 112a. Furthermore, in the present embodiment, the positioning recesses 112a and the positioning protrusions 122a may also improve the operation feel by adjusting the sizes thereof, and profiles of the positioning recesses 112a and the positioning protrusions 122a may be designed as being corresponded to each other, and more preferably as being arc-shaped, so that the process of moving the positioning protrusions 122a out of or engaging the positioning protrusions 122a into the corresponding positioning recesses 112a may also become more smooth; relative details may be referred to the previous embodiment, and thus no further elaboration will be provided. In addition, with the design of the restoring element 140, the first body 110a and the second body 120a may be automatically positioned via the restoring force after rotating to a predetermined position, thereby having favorable associativity.

Moreover, the first positioning structure and the second positioning structure of the present embodiment are not limited to the above-described configurations. For instance, in another embodiment, the first positioning structure of the first body may be a positioning recess, and the second positioning structure of the second body may be a plurality of positioning protrusions, namely, a difference between this embodiment and the previous embodiment lies in the amount of the positioning recess and the amount of the positioning protrusion. As such, one of the positioning protrusions may also be correspondingly engaged into the positioning recess, so as to enable the second positioning structure and the first positioning structure to be engaged to each other, thereby fixing the angle between the first body and the second body, such that the angle between the first body and the second body may also be adjusted and fixed further again with the above manner. Similarly, the configurations of the previously-described first positioning structure and the second positioning structure may be switched, such that the first positioning structure of the first body may be a positioning protrusion, and the second positioning structure of the second body may be a plurality of positioning recesses, whereby one of the positioning recesses, which are being the second positioning structure, is correspondingly engaged with the positioning protrusion, which is being first positioning structure. Otherwise, the first positioning structure of the first body may be a plurality of positioning protrusions, the second positioning structure of the second body may be a positioning recess, and the positioning recess, which is being the second positioning structure, may be correspondingly engaged with one of the positioning protrusions, which are being the first positioning structure. The first positioning structure and the second positioning structure aforementioned may also be configured to engage to each other so as to achieve an effect of fixing the angle between the first body and the second body, and the angle between the first body and the second body may be adjusted and fixed further again through adopting the above manner. Accordingly, it can be known that, the application does not intend to limit the specific configurations of the first positioning structure and the second positioning structure, and modifications can be made according to the needs.

In summary, in the angle adjustment mechanism of the application, the first body has the first positioning structure, such as a plurality of positioning recesses, the second body has the second positioning structure, such as a positioning protrusion, and the positioning protrusion is correspondingly engaged into the corresponding positioning recess, so that the first positioning structure and the second positioning structure are engaged to each other, thereby fixing the angle between the first body and the second body. In addition, the second body is adapted to rotate in relative to the first body along the axial direction, so as to adjust the angle. Now, the second positioning structure moves away from the first positioning structure along the radius direction, so that the positioning protrusion moves out of the corresponding positioning recess along the radius direction, thereby enabling the restoring element coupled to the second body to accumulate the restoring force. As such, the second positioning structure can approach the first positioning structure along the radius direction via the restoring force after the second body rotates an angle in relative to the first body, thereby fixing the angle between the first body and the second body further again. In addition, with the design of the restoring element, the first body and the second body may be automatically positioned via the restoring force after rotating to a predetermined position, thereby having favorable associativity. Accordingly, the angle adjustment mechanism of the application has a positioning function, and the first body and the second body thereof may adjust the angle therebetween through rotations and be fixed into positions after being rotated.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. An angle adjustment mechanism (100), comprising:
a first body (110), having a first positioning structure;
a second body (120), movably coupled to the first body (110) and having a second positioning structure and a sliding slot (126), wherein the second positioning structure and the first positioning structure are engaged to each other, and the second body (120) is adapted to rotate relative to the first body (110) about an axial direction (A1), so that the second positioning structure moves away from the first positioning structure along a radius direction (R1); and
a restoring element (140), coupled to the second body (120) and adapted to accumulate a restoring force when the second positioning structure moves away from the first positioning structure along the radius direction (R1), wherein the second positioning structure (122) is adapted to approach the first positioning structure along the radius direction (R1) via the restoring force after the second body (120) rotates an angle relative to the first body (110), so as to be reengaged to each other,
**characterized by**
a fixing base (150), having an accommodation space (152) and connected with the first body (110) and the second body (120), wherein the restoring element (140) is disposed within the accommodation space (152), wherein the second body (120) is located between the first body (110) and the fixing base (150), and wherein the fixing base (150) is adapted to rotate relative to the first body (110) about the axial direction (A1) and drive the second body (120) to rotate relative to the first body (110) and to move within the accommodation space (152), so that the restoring element (140) is deformed within the accommodation space (152) for accumulating or releasing the restoring force; and
a pivot (130), disposed between the first body (110) and the second body (120) and passing through the first body (110), the sliding slot (126) of the second body (120), and the fixing base (150) along the axial direction (A1), wherein the first body (110), the second body (120) and the fixing base (126) are pivoted together by the pivot (130), so that the second body (120) is adapted to rotate relative to the first body (110) about the axial direction (A1) via the pivot (130) and move relative to the pivot (130) through the sliding slot (126).

2. The angle adjustment mechanism (110) as recited in claim 1, wherein the restoring element (140) is connected between a bottom (124) of the second body (120) that faces towards the accommodation space (152) and an inner portion of the fixing base (150), so as to be deformed within the accommodation space (152) for accumulating or releasing the restoring force.

3. The angle adjustment mechanism (100) as recited in claim 1, further comprising:
a supporting member (160), disposed at a side of the fixing base (150) and connected to the accommodation space (152), wherein the restoring element (140) is connected between a bottom (124) of the second body (120) that faces towards the accommodation space (152) and the supporting member (160), so as to be deformed within the accommodation space (152) for accumulating or releasing the restoring force.

4. The angle adjustment mechanism (100) as recited in claim 1, wherein the first positioning structure comprises a plurality of positioning recesses (112), the second positioning structure comprises at least one positioning protrusion (122), the positioning protrusion (122) is correspondingly engaged into one of the positioning recesses (112), and the positioning protrusion (122) is adapted to move out of the said positioning recess (112) about the radius direction (R1) when the second body (120) rotates relative to the first body (110) about the axial direction (A1) and be engaged into another one of the positioning recesses (112) about the radius direction (R1) via the restoring element (140) releasing the restoring force after the second body (120) rotates an angle relative to the first body (110).

5. The angle adjustment mechanism (100) as recited in claim 4, wherein each of the positioning recesses (112) and the positioning protrusion (122) are long strip-shaped, and an extending direction (D) of each of the positioning recesses (112) and an extending direction (D) of the positioning protrusion (122) are parallel to each other.

6. The angle adjustment mechanism (100) as recited in claim 4, wherein the amount of the positioning protrusion (122) is a plurality.

7. The angle adjustment mechanism (100) as recited in claim 6, wherein the first body (110) has an indentation (114) located at a side of the positioning recesses (112), and after at least one of the positioning protrusions (122) moves out of the positioning recesses (112), the positioning protrusion (122) that moves out of the positioning recesses (112) is located within the indentation (114).

8. The angle adjustment mechanism (100) as recited in claim 4, wherein a profile of each of the positioning recesses (112) is corresponded to a profile of the positioning protrusion (120), so that the positioning protrusion (120) is adapted to move about a surface of the corresponding positioning recess (112) in order to move out or engage into the corresponding positioning recess (112).

9. The angle adjustment mechanism (100) as recited in claim 8, wherein profile sections of each of the positioning recesses (112) and the positioning protrusion (122) are arc-shaped.

10. The angle adjustment mechanism (100) as recited in claim 1, wherein the first positioning structure comprises at least one positioning recess (112), the second positioning structure comprises a plurality of positioning protrusions (122), and one the positioning protrusions (122) is correspondingly engaged into the positioning recess (112).

11. The angle adjustment mechanism (100) as recited in claim 1, wherein the first positioning structure comprises a plurality of positioning protrusions, the second positioning structure comprise at least one positioning recess, and the positioning recess is correspondingly engaged with one of the positioning protrusions.

12. The angle adjustment mechanism as recited in claim 1, wherein the first positioning structure comprises at least one positioning protrusion (122), the second positioning structure comprises a plurality of positioning recesses (112), and one of the positioning recesses (112) is correspondingly engaged with the positioning protrusion (122).

## Patentansprüche

1. Winkelanpassungsmechanismus (100), der Folgendes aufweist:
einen ersten Körper (110), mit einem ersten Positionierungsaufbau;
einen zweiten Körper (120), der in bewegbarer Weise mit dem ersten Körper (110) gekoppelt ist und einen zweiten Positionierungsaufbau und einen Gleitschlitz (126) aufweist, wobei sich der zweite Positionierungsaufbau und der erste Positionierungsaufbau in Eingriff miteinander befinden, und der zweite Körper (120) ausgelegt ist, um relativ zu dem ersten Körper (110) um eine Achsenrichtung (A1) gedreht zu werden, so dass sich der zweite Positionierungsaufbau weg von dem ersten Positionierungsaufbau entlang einer Radiusrichtung (R1) bewegt; und
ein Zurückführungselement (140), das mit dem zweiten Körper (120) gekoppelt und ausgelegt ist, um eine Zurückführungskraft zu akkumulieren, wenn sich der zweite Positionierungsaufbau weg von dem ersten Positionierungsaufbau entlang der Radiusrichtung (R1) bewegt, wobei der zweite Positionierungsaufbau (122) ausgelegt ist, um sich dem ersten Positionierungsaufbau entlang der Radiusrichtung (R1) über die Zurückführungskraft anzunähern, nachdem sich der zweite Körper (120) um einen Winkel relativ zu dem ersten Körper (110) dreht, um wieder in Eingriff miteinander gebracht zu werden,
**gekennzeichnet durch**
eine Befestigungsbasis (150), die einen Unterbringungsraum (152) aufweist und mit dem ersten Körper (110) und dem zweiten Körper (120) verbunden ist, wobei das Zurückführungselement (140) innerhalb des Unterbringungsraums (152) angeordnet ist, wobei der zweite Körper (120) zwischen dem ersten Körper (110) und der Befestigungsbasis (150) gelegen ist, und wobei die Befestigungsbasis (150) ausgelegt ist, um relativ zu dem ersten Körper (110) um die axiale Richtung (A1) gedreht zu werden und den zweiten Körper (120) anzutreiben, sich relativ zu dem ersten Körper (110) zu drehen und sich innerhalb des Unterbringungsraums (152) zu bewegen, so dass das Zurückführungselement (140) innerhalb des Unterbringungsraums (152) deformiert wird, um die Zurückführungskraft zu akkumulieren oder freizusetzen; und
einen Zapfen (130), der zwischen dem ersten Körper (110) und dem zweiten Körper (120) angeordnet ist und durch den ersten Körper (110), den Gleitschlitz (126) des zweiten Körpers (120) und die Befestigungsbasis (150) entlang der axialen Richtung (A1) hindurchgeht, wobei der erste Körper (110), der zweite Körper (120) und die Befestigungsbasis (126) gemeinsam durch den Zapfen (130) drehbar gelagert werden, so dass der zweite Körper (120) ausgelegt ist, um sich relativ zu dem ersten Körper (110) um die axiale Richtung (A1) über den Zapfen (130) zu drehen und sich relativ zu dem Zapfen (130) durch den Gleitschlitz (126) zu bewegen.

2. Winkelanpassungsmechanismus (100) gemäß Anspruch 1, wobei das Zurückführungselement (140) zwischen einer Unterseite (124) des zweiten Körpers (120), die zu dem Unterbringungsraum (152) weist, und einem Innenteil der Befestigungsbasis (150) verbunden ist, um innerhalb des Unterbringungsraums (152) zum Akkumulieren oder Freisetzen der Zurückführungskraft deformiert zu werden.

3. Winkelanpassungsmechanismus (100) gemäß Anspruch 1, der ferner Folgendes aufweist:
ein Unterstützungsglied (160), das an einer Seite der Befestigungsbasis (150) angeordnet und mit dem Unterbringungsraum (152) verbunden ist, wobei das Zurückführungselement (140) zwischen einer Unterseite (124) des zweiten Körpers (120), die zu dem Unterbringungsraum (152) weist, und dem Unterstützungsglied (160) verbunden ist, um innerhalb des Unterbringungsraums (152) deformiert zu werden, um die Zurückführungskraft zu akkumulieren oder freizusetzen.

4. Winkelanpassungsmechanismus (100) gemäß Anspruch 1, wobei der erste Positionierungsaufbau eine Vielzahl von Positionierungsausnehmungen (112) aufweist, der zweite Positionierungsaufbau zumindest einen Positionierungsvorsprung (122) aufweist, der Positionierungsvorsprung (122) entsprechend in eine der Positionierungsausnehmungen (112) in Eingriff gebracht wird, und der Positionierungsvorsprung (122) ausgelegt ist, um sich aus der Positionierungsausnehmung (112) um die Radiusrichtung (R1) heraus zu bewegen, wenn sich der zweite Körper (120) relativ zu dem ersten Körper (110) um die axiale Richtung (A1) dreht und in eine andere der Positionierungsausnehmungen (112) um die Umfangsrichtung (R1) über das Zurückführungselement (140) in Eingriff gebracht zu werden, wodurch die Zurückführungskraft freigesetzt wird, nachdem sich der zweite Körper (120) mit einem Winkel relativ zu dem ersten Körper (110) dreht.

5. Winkelanpassungsmechanismus (100) gemäß Anspruch 4, wobei jede der Positionierungsausnehmungen (112) und der Positionierungsvorsprung (122) die Form eines langen Streifens aufweisen, und eine Ausdehnungsrichtung (D) von jeder der Positionierungsausnehmungen (112) und einer Ausdehnungsrichtung (D) des Positionierungsvorsprungs (122) parallel zueinander sind.

6. Winkelanpassungsmechanismus (100) gemäß Anspruch 4, wobei die Anzahl der Positionierungsvorsprünge (122) eine Vielzahl ist.

7. Winkelanpassungsmechanismus (100) gemäß Anspruch 6, wobei der erste Körper (110) eine Einbuchtung (114) aufweist, die auf einer Seite der Positionierungsausnehmungen (112) gelegen ist, und nachdem sich zumindest einer der Positionierungsvorsprünge (122) aus den Positionierungsausnehmungen (112) heraus bewegt, der Positionierungsvorsprung (122), der sich aus den Positionierungsausnehmungen (112) heraus bewegt, innerhalb der Einbuchtung (114) gelegen ist.

8. Winkelanpassungsmechanismus (100) gemäß Anspruch 4, wobei ein Profil jeder der Positionierungsausnehmungen (112) einem Profil des Positionierungsvorsprungs (120) entspricht, so dass der Positionierungsvorsprung (120) ausgelegt ist, um sich an einer Oberfläche der entsprechenden Positionierungsausnehmung (112) zu bewegen, um sich in Eingriff in die Positionierungsausnehmung (112) und aus dieser heraus zu bewegen.

9. Winkelanpassungsmechanismus (100) gemäß Anspruch 8, wobei die Profilabschnitte jeder Positionierungsausnehmung (112) und des Positionierungsvorsprungs (122) bogenförmig sind.

10. Winkelanpassungsmechanismus (100) gemäß Anspruch 1, wobei der erste Positionierungsaufbau zumindest eine Positionierungsausnehmung (112) aufweist, der zweite Positionierungsaufbau eine Vielzahl von Positionierungsvorsprüngen (122) aufweist, und sich einer der Positionierungsvorsprünge (122) dementsprechend in Eingriff mit der Positionierungsausnehmung (112) befindet.

11. Winkelanpassungsmechanismus (100) gemäß Anspruch 1, wobei der erste Positionierungsaufbau eine Vielzahl von Positionierungsvorsprüngen aufweist, der zweite Positionierungsaufbau zumindest eine Positionierungsausnehmung aufweist, und sich die Positionierungsausnehmung dementsprechend in Eingriff mit einem der Positionierungsvorsprünge befindet.

12. Winkelanpassungsmechanismus (100) gemäß Anspruch 1, wobei der erste Positionierungsaufbau zumindest einen Positionierungsvorsprung (122) aufweist, der zweite Positionierungsaufbau eine Vielzahl von Positionierungsausnehmungen (112) aufweist, und sich eine der Positionierungsausnehmungen (112) dementsprechend in Eingriff mit dem Positionierungsvorsprung (122) befindet.

## Revendications

1. Mécanisme d'ajustement d'angle (100), comprenant :
un premier corps (110), ayant une première structure de positionnement ;
un deuxième corps (120), couplé de manière mobile au premier corps (110) et ayant une deuxième structure de positionnement et une fente de coulissement (126), la deuxième structure de positionnement et la première structure de positionnement étant en prise entre elles, et le deuxième corps (120) étant adapté à tourner par rapport au premier corps (110) autour d'une direction axiale (A1), de sorte que la deuxième structure de positionnement s'éloigne de la première structure de positionnement suivant une direction de rayon (R1) ; et
un élément de restauration (140), couplé au deuxième corps (120) et adapté à accumuler une force de restauration lorsque la deuxième structure de positionnement s'éloigne de la première structure de positionnement suivant la direction de rayon (R1), la deuxième structure de positionnement (122) étant adaptée à se rapprocher de la première structure de positionnement suivant la direction de rayon (R1) par l'intermédiaire de la force de restauration après que le deuxième corps (120) a tourné d'un angle relatif par rapport au premier corps (110), afin qu'ils se remettent en prise entre eux,
**caractérisé par**
une base de fixation (150), comportant un espace de logement (152) et connectée au premier corps (110) et au deuxième corps (120), l'élément de restauration (140) étant disposé dans l'espace de logement (152), le deuxième corps (120) étant situé entre le premier corps (110) et la base de fixation (150), et la base de fixation (150) étant adaptée à tourner par rapport au premier corps (110) autour de la direction axiale (A1) et à entraîner le deuxième corps (120) dans une rotation par rapport au premier corps (110) et dans un déplacement dans l'espace de logement (152), de sorte que l'élément de restauration (140) est déformé dans l'espace de logement (152) pour accumuler ou libérer la force de restauration ; et
un pivot (130), disposé entre le premier corps (110) et le deuxième corps (120) et passant à travers le premier corps (110), la fente de coulissement (126) du deuxième corps (120), et la base de fixation (150) suivant la direction axiale (A1), le premier corps (110), le deuxième corps (120) et la base de fixation (126) pouvant pivoter ensemble autour du pivot (130), de sorte que le deuxième corps (120) est adapté à tourner par rapport au premier corps (110) autour de la direction axiale (A1) par l'intermédiaire du pivot (130) et à se déplacer par rapport au pivot (130) dans la fente de coulissement (126).

2. Mécanisme d'ajustement d'angle (110) selon la revendication 1, dans lequel l'élément de restauration (140) est connecté entre le dessous (124) du deuxième corps (120) qui est orienté vers l'espace de logement (152) et une portion intérieure de la base de fixation (150), afin de se déformer dans l'espace de logement (152) pour accumuler ou libérer la force de restauration.

3. Mécanisme d'ajustement d'angle (100) selon la revendication 1, comprenant en outre :
un élément support (160), disposé au niveau d'un côté de la base de fixation (150) et connecté à l'espace de logement (152), l'élément de restauration (140) étant connecté entre le dessous (124) du deuxième corps (120) qui est orienté vers l'espace de logement (152) et l'élément support (160), afin de se déformer dans l'espace de logement (152) pour accumuler ou libérer la force de restauration.

4. Mécanisme d'ajustement d'angle (100) selon la revendication 1, dans lequel la première structure de positionnement comprend une pluralité d'évidements de positionnement (112), la deuxième structure de positionnement comprend au moins une protubérance de positionnement (122), la protubérance de positionnement (122) est engagée de manière correspondante dans l'un des évidements de positionnement (112), et la protubérance de positionnement (122) est adaptée à sortir de l'évidement de positionnement (112) autour de la direction de rayon (R1) lorsque le deuxième corps (120) tourne par rapport au premier corps (110) autour de la direction axiale (A1) et à être engagée dans un autre des évidements de positionnement (112) autour de la direction de rayon (R1) par l'intermédiaire de l'élément de restauration (140) libérant la force de restauration après que le deuxième corps (120) a tourné d'un angle relatif par rapport au premier corps (110).

5. Mécanisme d'ajustement d'angle (100) selon la revendication 4, dans lequel chacun des évidements de positionnement (112) et la protubérance de positionnement (122) ont une forme de bande allongée, et une direction d'extension (D) de chacun des évidements de positionnement (112) et une direction d'extension (D) de la protubérance de positionnement (122) sont parallèles entre elles.

6. Mécanisme d'ajustement d'angle (100) selon la revendication 4, dans lequel il y a une pluralité de protubérances de positionnement (122).

7. Mécanisme d'ajustement d'angle (100) selon la revendication 6, dans lequel le premier corps (110) comporte une indentation (114) située au niveau d'un côté des évidements de positionnement (112), et après qu'au moins l'une des protubérances de positionnement (122) est sortie des évidements de positionnement (112), la protubérance de positionnement (122) qui sort des évidements de positionnement (112) se trouve dans l'indentation (114).

8. Mécanisme d'ajustement d'angle (100) selon la revendication 4, dans lequel un profil de chacun des évidements de positionnement (112) est en correspondance avec un profil de la protubérance de positionnement (120), de sorte que la protubérance de positionnement (120) est adaptée à se déplacer autour d'une surface de l'évidement de positionnement (112) correspondant afin de sortir de ou de s'engager dans l'évidement de positionnement (112) correspondant.

9. Mécanisme d'ajustement d'angle (100) selon la revendication 8, dans lequel des sections de profil de chacun des évidements de positionnement (112) et de la protubérance de positionnement (122) ont une forme d'arc.

10. Mécanisme d'ajustement d'angle (100) selon la revendication 1, dans lequel la première structure de positionnement comprend au moins un évidement de positionnement (112), la deuxième structure de positionnement comprend une pluralité de protubérances de positionnement (122), et l'une des protubérances de positionnement (122) est engagée de façon correspondante dans l'évidement de positionnement (112).

11. Mécanisme d'ajustement d'angle (100) selon la revendication 1, dans lequel la première structure de positionnement comprend une pluralité de protubérances de positionnement, la deuxième structure de positionnement comprend au moins un évidement de positionnement, et l'évidement de positionnement est engagé de façon correspondante avec l'une des protubérances de positionnement.

12. Mécanisme d'ajustement d'angle selon la revendication 1, dans lequel la première structure de positionnement comprend au moins une protubérance de positionnement (122), la deuxième structure de positionnement comprend une pluralité de d'évidements de positionnement (112), et l'un des évidements de positionnement (112) est engagé de façon correspondante avec la protubérance de positionnement (122).
